# EUROPEAN PATENT APPLICATION

(11) **EP 2 996 052 A1**
(43) Date of publication of application: **16.03.2016**
(21) Application number: 15183746.5
(22) Date of filing: 03.09.2015
(51) Int. Cl.: G06F 17/30

(54) **METHOD AND APPARATUS FOR DISPLAYING MEDIA FILE ON TERMINAL BY USING PAGE**

(30) Priority: 11.09.2014 CN 201410462636
(71) Applicant: Huawei Technologies Co., Ltd., Longgang District Shenzhen, Guangdong 518129 (CN)
(72) Inventor: EKSTRAND, Simon, 518129, P.R. Shenzhen (CN); CHENG, Cheng, 518129, P.R. Shenzhen (CN)
(74) Representative: Gill Jennings & Every LLP

(57) **Abstract**

Embodiments of the present invention disclose a method for displaying a media file on a terminal by using a page, including: when a page acquiring instruction is received, acquiring pictures of multiple pieces of media content that need to be included in a to-be-displayed page; acquiring popularity data of each piece of media content in the multiple pieces of media content; and determining, according to a preset correspondence between popularity data and a popularity level, a popularity level corresponding to the popularity data of each piece of media content, marking, by using a popularity identifier that corresponds to the popularity level of each piece of media content, a picture of each piece of media content to obtain the display page, and displaying the display page on the terminal, where the display page includes the pictures of the multiple pieces of media content, thereby solving a problem in the prior art that a user cannot quickly determine recently relatively hot or popular content when searching a display page with massive media content for media content.

## Description

### TECHNICAL FIELD

The present invention relates to the field of digital media, and in particular, to a method and an apparatus for displaying a media file on a terminal by using a page.

### BACKGROUND

In the field of digital media, on a media device such as a computer, a television, a smartphone, a tablet computer, or a video wall, a picture is used to represent a piece of digital media content. For example, a film poster, a television play poster, a video screenshot, a music album cover, or a book cover is used to present a film, a television play, a video, a song, an electronic book, or the like. By using this type of presentation manner, it helps a user browse related media content quickly and select target content.

In the prior art, generally, importance or popularity of some media content is highlighted in a manner such as using a red font, a dropped capital letter, or a bold font, so as to achieve an objective of attracting attention of the user, and also reduce time used for selection by the user to a certain degree.

It is found in the present invention in a research and practice process of the prior art that, in the prior art, when searching a display page with massive media content for media content, the user cannot quickly determine which content is recently relatively hot or popular content or the like, and also cannot quickly perceive summary content of media content.

### SUMMARY

Embodiments of the present invention provide a method and an apparatus for displaying a media file on a terminal by using a page, which can solve a problem in the prior art that a user cannot quickly determine recently relatively hot or popular content when searching a display page with massive media content for media content.

A first aspect of the present invention provides a method for displaying a media file on a terminal by using a page is provided, where the method includes:
when a page acquiring instruction is received, acquiring pictures of multiple pieces of media content that need to be included in a to-be-displayed page;
acquiring popularity data of each piece of media content in the multiple pieces of media content; and
determining, according to a preset correspondence between popularity data and a popularity level, a popularity level corresponding to the popularity data of each piece of media content, marking, by using a popularity identifier that corresponds to the popularity level of each piece of media content, a picture of each piece of media content to obtain the display page, and displaying the display page on the terminal, where the display page includes the pictures of the multiple pieces of media content.

With reference to the first aspect of the present invention, in a first implementation manner of the first aspect in the embodiments of the present invention, the popularity identifier is used to indicate a frame of the picture of each piece of media content; and
the marking, by using a popularity identifier that corresponds to the popularity level of each piece of media content, a picture of each piece of media content includes:
setting, according to the popularity level of each piece of media content, different colors of frames for all the pieces of media content, where different colors correspond to different popularity levels.

With reference to the first aspect of the present invention and the first implementation manner of the first aspect, in a second implementation manner of the first aspect in the embodiments of the present invention, the method further includes:
determining a historical playback progress, which is on the terminal, of each piece of media content in the multiple pieces of media content; and
during the marking, by using a popularity identifier that corresponds to the popularity level of each piece of media content, a picture of each piece of media content, setting, on the picture of each piece of media content, a mark for the historical playback progress of each piece of media content.

With reference to the first aspect of the present invention and the first and the second implementation manners of the first aspect, in a third implementation manner of the first aspect in the embodiments of the present invention, the method further includes:
receiving a preview content acquiring instruction, where the preview content acquiring instruction carries a preview identifier of user-specified media content, and acquiring preview content of the user-specified media content according to the preview identifier; and
displaying the preview content at a display area that does not overlap a display area corresponding to a picture of the user-specified media content.

With reference to the first aspect of the present invention and the first and the second implementation manners of the first aspect, in the third implementation manner of the first aspect in the embodiments of the present invention, the acquiring popularity data of each piece of media content in the multiple pieces of media content includes:
collecting statistics about at least either a quantity of visits or viewing duration of each piece of media content in the multiple pieces of media content; and
the determining, according to a preset correspondence between popularity data and a popularity level, a popularity level corresponding to the popularity data of each piece of media content includes:
   determining, according to the at least either the quantity of visits or the viewing duration of each piece of media content, the popularity level of each piece of media content from the preset correspondence between popularity data and a popularity level.

A second aspect of the present invention provides an apparatus for displaying a media file, including:
a first acquiring unit, configured to: when a page acquiring instruction is received, acquire pictures of multiple pieces of media content that need to be included in a to-be-displayed page;
a second acquiring unit, configured to acquire popularity data of each piece of media content in the multiple pieces of media content acquired by the first acquiring unit;
a first determining unit, configured to determine, according to a preset correspondence between popularity data and a popularity level, a popularity level corresponding to the popularity data of each piece of media content; and
a first execution unit, configured to mark, by using a popularity identifier that corresponds to the popularity level of each piece of media content, a picture of each piece of media content to obtain the display page, and display the display page on the terminal, where the display page includes the pictures of the multiple pieces of media content.

With reference to the second aspect, in a first implementation manner of the second aspect in the embodiments of the present invention, the first execution unit includes:
a first execution module, configured to set, according to the popularity level of each piece of media content, different colors of frames for all the pieces of media content to obtain the display page, where different colors correspond to different popularity levels.

With reference to the second aspect and the first implementation manner of the second aspect, in a second implementation manner of the second aspect in the embodiments of the present invention, the apparatus further includes:
a third acquiring unit, configured to determine a historical playback progress, which is on the terminal, of each piece of media content in the multiple pieces of media content; and
a second execution unit, configured to: during the marking, by using a popularity identifier that corresponds to the popularity level of each piece of media content, a picture of each piece of media content, set, on the picture of each piece of media content, a mark for the historical playback progress of each piece of media content.

With reference to the second aspect and the first and the second implementation manners of the second aspect, in a third implementation manner of the second aspect in the embodiments of the present invention, the apparatus further includes:
a receiving unit, configured to receive a preview content acquiring instruction, where the preview content acquiring instruction carries a preview identifier of user-specified media content;
a fourth acquiring unit, configured to determine preview content of each piece of media content according to the preview identifier; and
a display unit, configured to display the preview content at a display area that does not overlap a display area corresponding to a picture of the user-specified media content.

With reference to the second aspect and the first to the third implementation manners of the second aspect, in a fourth implementation manner of the second aspect in the embodiments of the present invention, the second acquiring unit includes:
a first statistics collecting module, configured to collect statistics about at least either a quantity of visits or viewing duration of each piece of media content in the multiple pieces of media content; and
further, the first determining unit includes:
   a first acquiring module, configured to determine, according to the at least either the quantity of visits or the viewing duration, about which the first statistics collecting module collects statistics, of each piece of media content, the popularity level of each piece of media content from the preset correspondence between popularity data and a popularity level.

A third aspect of the present invention provides a digital media system, including:
a server and a terminal, where
the server is the apparatus for displaying a media file according to the second aspect and the first to the fourth implementation manners of the second aspect; and
the terminal is configured for the display page, where the display page includes the pictures of the multiple pieces of media content.

It can be seen from the foregoing technical solutions that a method for displaying a media file on a terminal by using a page provided in the embodiments of the present invention includes: when a page acquiring instruction is received, acquiring pictures of multiple pieces of media content that need to be included in a to-be-displayed page; acquiring popularity data of each piece of media content in the multiple pieces of media content; and determining, according to a preset correspondence between a popularity data range and a popularity level, a popularity level corresponding to each piece of media content, marking, by using a popularity identifier that corresponds to the popularity level of each piece of media content, a picture of each piece of media content to obtain the to-be-displayed page, and displaying a display page on a terminal, where the display page includes the pictures of the multiple pieces of media content, thereby solving a problem in the prior art that a user cannot quickly determine recently relatively hot or popular content when searching a display page with massive media content for media content.

### BRIEF DESCRIPTION OF DRAWINGS

FIG. 1 is a schematic diagram of an embodiment of a method for displaying a media file on a terminal by using a page according to the embodiments;
FIG. 2 is a schematic diagram of another embodiment of a method for displaying a media file on a terminal by using a page according to the embodiments;
FIG. 3 is a schematic diagram of another embodiment of a method for displaying a media file on a terminal by using a page according to the embodiments;
FIG. 4 is a schematic diagram of another embodiment of a method for displaying a media file on a terminal by using a page according to the embodiments;
FIG. 5 is a schematic diagram of another embodiment of a method for displaying a media file on a terminal by using a page according to the embodiments;
FIG. 6 is a schematic diagram of an embodiment of a specific application scenario of a method for displaying a media file on a terminal by using a page according to the embodiments;
FIG. 7 is a schematic diagram of an embodiment of an apparatus for displaying a media file according to the embodiments;
FIG. 8 is a schematic diagram of another embodiment of an apparatus for displaying a media file according to the embodiments;
FIG. 9 is a schematic diagram of another embodiment of an apparatus for displaying a media file according to the embodiments;
FIG. 10 is a schematic diagram of another embodiment of an apparatus for displaying a media file according to the embodiments;
FIG. 11 is a schematic diagram of an embodiment of a digital media system according to the embodiments; and
FIG. 12 is a schematic diagram of a physical apparatus of an apparatus for displaying a media file according to the embodiments.

### DESCRIPTION OF EMBODIMENTS

To make a person skilled in the art understand the technical solutions in the present invention better, the following clearly describes the technical solutions in the embodiments of the present invention with reference to the accompanying drawings in the embodiments of the present invention. Apparently, the described embodiments are merely a part rather than all of the embodiments of the present invention. All other embodiments obtained by a person skilled in the art based on the embodiments of the present invention without creative efforts shall fall within the protection scope of the present invention.

In the specification, claims, and accompanying drawings of the present invention, the terms "first", "second", "third", "fourth", and so on are intended to distinguish between similar objects but do not necessarily indicate a specific order or sequence. It should be understood that the data termed in such a way are interchangeable in proper circumstances so that the embodiments of the present invention described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those steps or units, but may include other steps or units not expressly listed or inherent to such a process, method, system, product, or device.

The embodiments of the present invention provide a method and an apparatus for displaying a media file on a terminal by using a page, which are used to solve a problem that a user cannot quickly determine recently relatively hot or popular content when searching a display page with massive media content for media content, and detailed descriptions are provided below.

It should be noted that in this specification, popularity data of media content is not limited to a quantity of visits and viewing duration and is not limited in this specification, as long as the data can reflect popularity of media content, and a manner of reflecting a popularity mark is not limited in this specification and may be a manner similar to, for example, making fonts in bold and blackened, or setting a corresponding transparency or color for a background; in this specification, a mark for a historical playback progress of media content is not limited to a transparent progress bar or progress block, may also be a reflection manner similar to, for example, a background color of a picture, or a percentage rate, and is not limited in this specification, as long as the historical playback progress can be reflected; in this specification, a playback position of preview content on a terminal is not limited, as long as there is no overlapping part between the playback position and a display area to which currently to-be-displayed media content belongs.

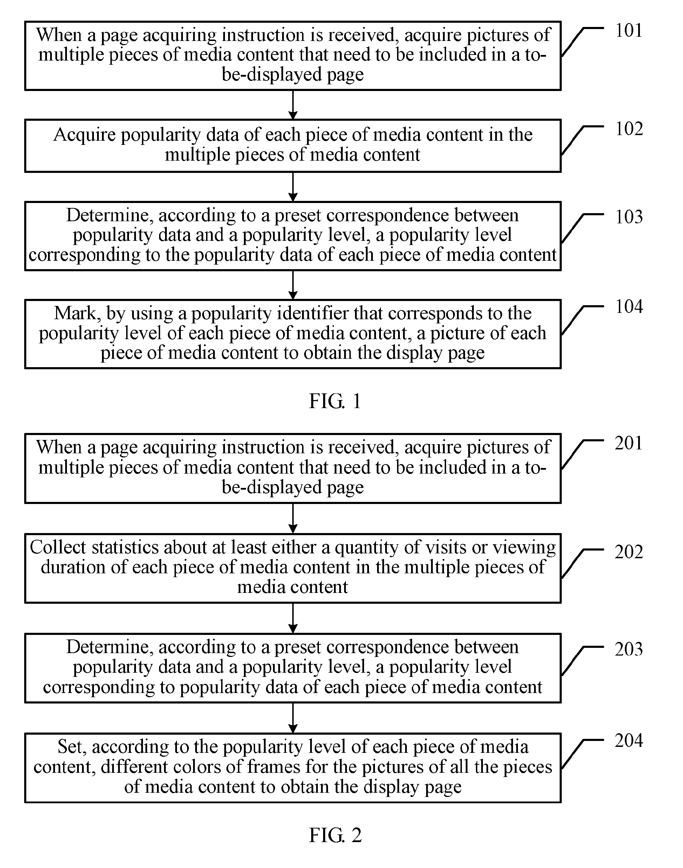

The embodiments of the present invention apply to the field of digital media. Referring to FIG. 1, an embodiment of a method for displaying a media file on a terminal by using a page in the embodiments of the present invention includes:

101: When a page acquiring instruction is received, acquire pictures of multiple pieces of media content that need to be included in a to-be-displayed page.

It should be noted that the page acquiring instruction may be received by a server side, or may also be received by a user terminal side, or is received by any device that can complete functions such as performing division and identification on popularity of media content in the present invention. No specific limitation is imposed in this specification.

102: Acquire popularity data of each piece of media content in the multiple pieces of media content.

103: Determine, according to a preset correspondence between popularity data and a popularity level, a popularity level corresponding to the popularity data of each piece of media content.

104: Mark, by using a popularity identifier that corresponds to the popularity level of each piece of media content, a picture of each piece of media content to obtain the display page.

By using the popularity identifier, the picture of each piece of media content is marked to obtain the display page, that is, the to-be-displayed page, so that the display page is displayed on the terminal, where the display page includes the pictures of the multiple pieces of media content.

It should be noted that when a server receives the page acquiring instruction, the server sends the display page marked with the popularity level to a user terminal; if the user terminal acquires the page acquiring instruction by its own, the user terminal displays the display page on a display screen of the user terminal, and a specific implementation manner is not limited in this specification.

A method for displaying a media file on a terminal by using a page provided in this embodiment of the present invention includes: when a page acquiring instruction is received, acquiring pictures of multiple pieces of media content; acquiring popularity data of each piece of media content; and determining, according to a preset correspondence between a popularity data range and a popularity level, a popularity level corresponding to each piece of media content, marking, by using a popularity identifier that corresponds to the popularity level, a picture of each piece of media content to obtain a display page, and displaying the display page on the terminal, thereby solving a problem in the prior art that a user cannot quickly determine recently relatively hot or popular content when searching a display page with massive media content for media content.

Referring to FIG. 2, a method for displaying a media file on a terminal by using a page in an embodiment of the present invention includes:

201: When a page acquiring instruction is received, acquire pictures of multiple pieces of media content that need to be included in a to-be-displayed page.

202: Collect statistics about at least either a quantity of visits or viewing duration of each piece of media content in the multiple pieces of media content.

The at least either the quantity of visits or the viewing duration of each piece of media content in the multiple pieces of media content about which statistics are collected is popularity data of each piece of media content.

203: Determine, according to a preset correspondence between popularity data and a popularity level, a popularity level corresponding to the popularity data of each piece of media content.

A specific implementation manner is as follows:
determining, according to the popularity data of each piece of media content, a preset popularity data range to which each piece of media content belongs; and
determining, according to the at least either the quantity of visits or the viewing duration of each piece of media content, a preset popularity data range to which each piece of media content belongs.

204: Set, according to the popularity level of each piece of media content, different colors of frames for the pictures of all the pieces of media content to obtain the display page.

Different colors correspond to different levels. The colors are arranged from high color purity to low color purity according to the popularity level, and a middle part of a picture is transparent to a certain degree.

The different colors of frames are set for the pictures of all the pieces of media content according to the popularity level of each piece of media content to obtain the display page, and the display page is displayed on the terminal, where the display page includes the pictures of the multiple pieces of media content.

It should be noted that, on the pictures of all the pieces of media content, different colors of frames may be set, different colors of corner frames may be set, or other similar popularity identifiers may be set, which is not limited in this specification, as long as a function of popularity identification is achieved.

A method for displaying a media file on a terminal by using a page provided in this embodiment of the present invention includes: when a page acquiring instruction is received, acquiring pictures of multiple pieces of media content; determining, by collecting statistics about a quantity of visits and viewing duration of each piece of media content, a preset popularity data range to which each piece of media content belongs; and determining, according to a preset correspondence between popularity data and a popularity level, a popularity level corresponding to popularity data of each piece of media content, marking, by using a popularity identifier that corresponds to the popularity level, a picture of each piece of media content to obtain a display page, and displaying the display page on the terminal, thereby solving a problem in the prior art that a user cannot quickly determine recently relatively hot or popular content when searching a display page with massive media content for media content.

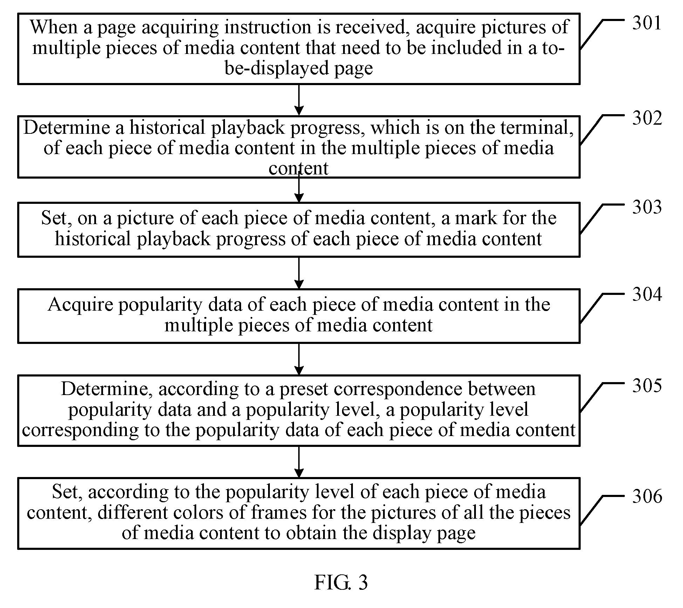

Referring to FIG. 3, another embodiment of a method for displaying a media file on a terminal by using a page in the embodiments of the present invention includes:

301: When a page acquiring instruction is received, acquire pictures of multiple pieces of media content that need to be included in a to-be-displayed page.

302: Determine a historical playback progress, which is on the terminal, of each piece of media content in the multiple pieces of media content.

303: Set, on a picture of each piece of media content, a mark for the historical playback progress of each piece of media content.

304: Acquire popularity data of each piece of media content in the multiple pieces of media content.

A specific implementation manner of acquiring the popularity data is as follows:
collecting statistics about at least either a quantity of visits or viewing duration of each piece of media content in the multiple pieces of media content.

305: Determine, according to a preset correspondence between popularity data and a popularity level, a popularity level corresponding to the popularity data of each piece of media content.

A specific implementation manner is as follows:
determining, according to the at least either the quantity of visits or the viewing duration of each piece of media content, a preset popularity data range to which each piece of media content belongs; and
determining, according to a preset correspondence between a popularity data range and a popularity level, the popularity level of each piece of media content.

306: Set, according to the popularity level of each piece of media content, different colors of frames for the pictures of all the pieces of media content to obtain the display page.

Different colors correspond to different levels. The colors are arranged from high color purity to low color purity according to the popularity level, and a middle part of a picture is transparent to a certain degree.

The different colors of frames are set for the pictures of all the pieces of media content according to the popularity level of each piece of media content to obtain the display page, and the display page is displayed on the terminal, where the display page includes the pictures of the multiple pieces of media content.

A method for displaying a media file on a terminal by using a page provided in this embodiment of the present invention includes: when a page acquiring instruction is received, acquiring pictures of multiple pieces of media content; setting, on a picture of each piece of media content, a mark for a historical playback progress of each piece of media content, so that a user can distinguish between content that is viewed and content that is not viewed, and know a playback progress of the content that is viewed; and determining, by collecting statistics about popularity data of each piece of media content and according to a preset correspondence between popularity data and a popularity level, a popularity level corresponding to the popularity data of each piece of media content, marking, by using a popularity identifier that corresponds to the popularity level, a picture of each piece of media content to obtain a display page, and displaying the display page on the terminal, thereby solving a problem in the prior art that a user cannot quickly determine recently relatively hot or popular content when searching a display page with massive media content for media content.

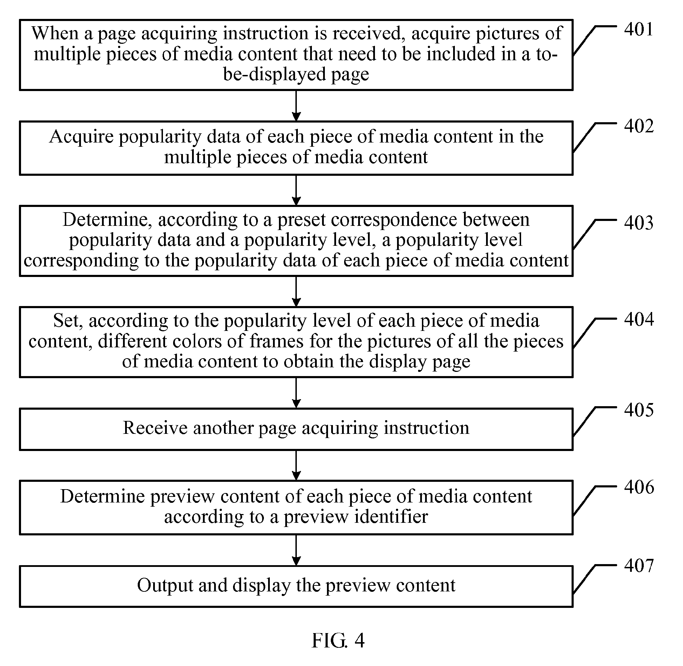

Referring to FIG. 4, another embodiment of a method for displaying a media file on a terminal by using a page in the embodiments of the present invention includes:

401: When a page acquiring instruction is received, acquire pictures of multiple pieces of media content that need to be included in a to-be-displayed page.

402: Acquire popularity data of each piece of media content in the multiple pieces of media content.

A specific implementation manner of acquiring the popularity data is as follows:
collecting statistics about at least either a quantity of visits or viewing duration of each piece of media content in the multiple pieces of media content.

403: Determine, according to a preset correspondence between popularity data and a popularity level, a popularity level corresponding to the popularity data of each piece of media content.

A specific implementation manner is as follows:
determining, according to the popularity data of each piece of media content, a preset popularity data range to which each piece of media content belongs; and
determining, according to the at least either the quantity of visits or the viewing duration of each piece of media content, a preset popularity data range to which each piece of media content belongs.

404: Set, according to the popularity level of each piece of media content, different colors of frames for the pictures of all the pieces of media content to obtain the display page.

Different colors correspond to different levels. The colors are arranged from high color purity to low color purity according to the popularity level, and a middle part of a picture is transparent to a certain degree.

The different colors of frames are set for the pictures of all the pieces of media content according to the popularity level of each piece of media content to obtain the display page, and the display page is used to display the pictures of the multiple pieces of media content that need to be included in the to-be-displayed page.

405: Receive a preview content acquiring instruction.

The preview content acquiring instruction carries a preview identifier.

It should be noted that, in this embodiment of the present invention, the preview content acquiring instruction may be used to identify the popularity level of each piece of media content, or may also carry the preview identifier at the same time, so that preview content corresponding to the preview identifier can be displayed at a display area that does not overlap a display area corresponding to each piece of media content; there may be sequences, the sequences may be changed, and a specific time sequence is not limited in this specification.

406: Acquire preview content of user-specified media content according to the preview identifier.

407: Output and display the preview content.

The preview content is displayed at a display area that does not overlap a display area corresponding to a picture of the user-specified media content.

A method for displaying a media file on a terminal by using a page provided in this embodiment of the present invention includes: when a page acquiring instruction is received, acquiring pictures of multiple pieces of media content; determining, by collecting statistics about a quantity of visits and viewing duration of each piece of media content, a preset popularity data range to which each piece of media content belongs; and determining a popularity level corresponding to each piece of media content from a correspondence between a popularity data range and a popularity level, marking, by using a popularity identifier that corresponds to the popularity level, a picture of each piece of media content to obtain a display page, and displaying the display page on the terminal, thereby solving a problem in the prior art that a user cannot quickly determine recently relatively hot or popular content when searching a display page with massive media content for media content. In addition, when another page acquiring instruction is received, preview content of user-specified media content is acquired according to a preview identifier, so that the preview content can be viewed on the terminal without a need for returning to an original page for selection again, and therefore is convenient and efficient.

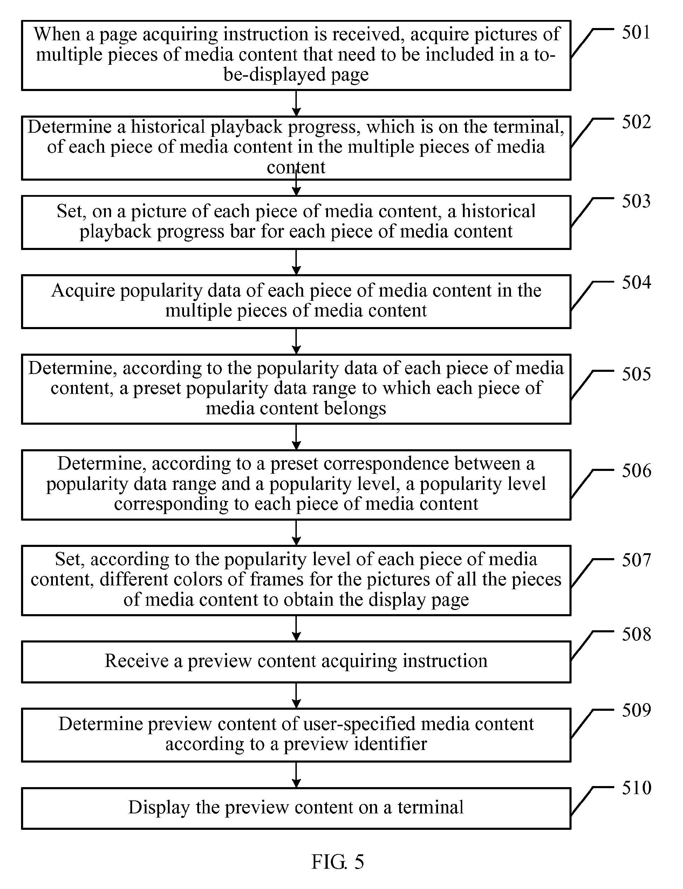

Referring to FIG. 5, another embodiment of a method for displaying a media file on a terminal by using a page in the embodiments of the present invention includes:

501: When a page acquiring instruction is received, acquire pictures of multiple pieces of media content that need to be included in a to-be-displayed page.

502: Determine a historical playback progress, which is on the terminal, of each piece of media content in the multiple pieces of media content.

503: Set, on a picture of each piece of media content, a historical playback progress bar for each piece of media content.

504: Acquire popularity data of each piece of media content in the multiple pieces of media content.

A specific implementation manner of acquiring the popularity data is as follows:
collecting statistics about at least either a quantity of visits or viewing duration of each piece of media content in the multiple pieces of media content.

505: Determine, according to the popularity data of each piece of media content, a preset popularity data range to which each piece of media content belongs.

The preset popularity data range to which each piece of media content belongs is determined according to at least either the quantity of visits or the viewing duration of each piece of media content.

506: Determine, according to a preset correspondence between popularity data and a popularity level, a popularity level corresponding to the popularity data of each piece of media content.

507: Set, according to the popularity level of each piece of media content, different colors of frames for the pictures of all the pieces of media content to obtain the display page.

Different colors correspond to different levels. The colors are arranged from high color purity to low color purity according to the popularity level, and a middle part of a picture is transparent to a certain degree.

The different colors of frames are set for the pictures of all the pieces of media content according to the popularity level of each piece of media content to obtain the display page, and the display page is displayed on the terminal, where the display page includes the pictures of the multiple pieces of media content.

508: Receive a preview content acquiring instruction. The preview content acquiring instruction carries a preview identifier.

It should be noted that, in this embodiment of the present invention, the page acquiring instruction may be used to identify the popularity level of each piece of media content, or may also carry the preview identifier at the same time, so that preview content corresponding to the preview identifier can be displayed at a display area that does not overlap a display area corresponding to each piece of media content; there may be sequences, the sequences may be changed, and a specific time sequence is not limited in this specification.

509: Acquire preview content of user-specified media content according to the preview identifier.

510: Display the preview content on a terminal.

The preview content is displayed at a display area that does not overlap a display area corresponding to a picture of the user-specified media content. A method for displaying a media file on a terminal by using a page provided in this embodiment of the present invention includes: when a page acquiring instruction is received, acquiring pictures of multiple pieces of media content; setting, on a picture of each piece of media content, a mark for a historical playback progress of each piece of media content, so that a user can distinguish between content that is viewed and content that is not viewed, and know a playback progress of the content that is viewed; and determining, by collecting statistics about a quantity of visits and viewing duration of each piece of media content, a preset popularity data range to which each piece of media content belongs; and determining a popularity level corresponding to each piece of media content from a correspondence between a popularity data range and a popularity level, marking, by using a popularity identifier that corresponds to the popularity level, a picture of each piece of media content to obtain a display page, and displaying the display page on the terminal, thereby solving a problem in the prior art that a user cannot quickly determine recently relatively hot or popular content when searching a display page with massive media content for media content. In addition, when a preview content acquiring instruction is received, preview content of each piece of media content is determined according to a preview identifier, so that the preview content can be viewed on the terminal without a need for returning to an original page for selection again, and therefore is convenient and efficient.

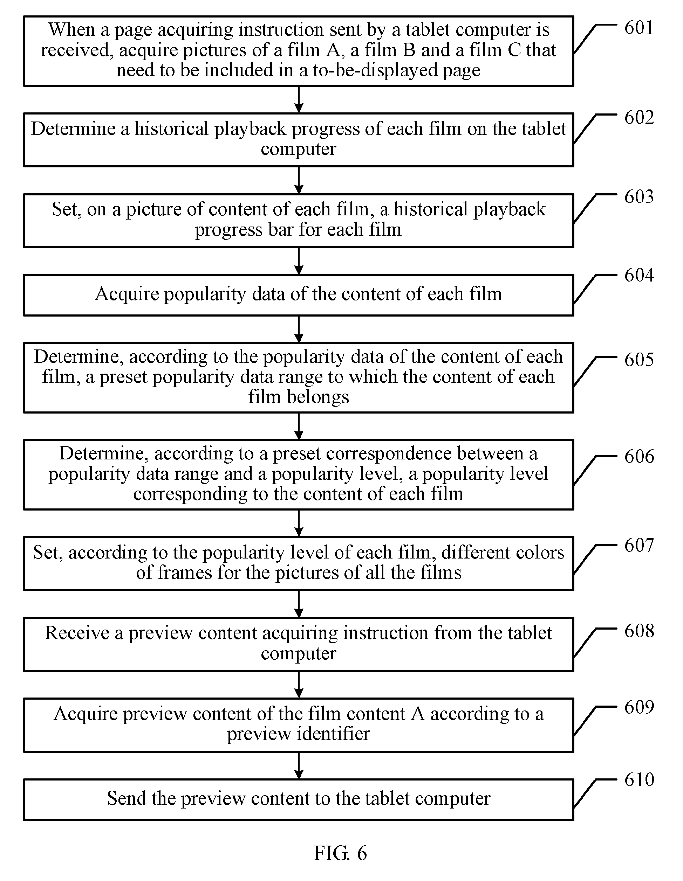

For ease of understanding, an embodiment of the present invention is described in detail below by using a specific application scenario. In an example, a server is used as an execution body, and a user watches a film on a tablet computer. In this case, pictures of a film A, a film B and a film C are displayed on a page of the tablet computer. Referring to FIG. 6, another embodiment of a method for displaying a media file on a terminal by using a page in the embodiments of the present invention includes:

601: When a page acquiring instruction sent by a tablet computer is received, acquire pictures of a film A, a film B and a film C that need to be included in a to-be-displayed page.

602: Determine a historical playback progress of each film on the tablet computer.

603: Set, on a picture of content of each film, a historical playback progress bar for each film.

604: Acquire popularity data of the content of each film.

A specific implementation manner of acquiring the popularity data is as follows:
collecting statistics about at least either a quantity of visits or viewing duration of the content of each film.

605: Determine, according to the popularity data of the content of each film, a preset popularity data range to which the content of each film belongs.

The preset popularity data range to which the content of each film belongs is determined according to at least either the quantity of visits or the viewing duration of the content of each film.

606: Determine, according to a preset correspondence between a popularity data range and a popularity level, a popularity level corresponding to the content of each film.

Popularity levels of the film A, the film B and the film C are obtained separately, where the popularity levels of the three films are arranged from high to low and from left to right.

607: Separately add, to the picture of the content of each film, a colored frame that is indicated by a popularity identifier of the content of each film.

A colored frame that is indicated by a popularity identifier of each piece of media content is added to the picture of each piece of media content. For example, a red frame is set for a picture of the film A, a blue frame is set for a picture of the film B, and a gray frame is set for a picture of the film C. Middle parts of the pictures of the three films are transparent to a certain degree. The display page is obtained, and the display page is displayed on the terminal. The display page includes pictures of multiple pieces of media content.

608: Receive a preview content acquiring instruction from the tablet computer.

The preview content acquiring instruction carries a preview identifier of film content A.

A display area to which a picture of the film content A belongs is a left area of a touchscreen of the tablet computer.

609: Acquire preview content of the film content A according to a preview identifier.

610: Send the preview content to the tablet computer.

Therefore, the tablet computer displays the preview content on any display area on a right side of the touchscreen of the tablet computer.

A method for displaying a media file on a terminal by using a page provided in this embodiment of the present invention includes: when a page acquiring instruction is received, acquiring pictures of three films; setting, on each picture, a mark for a historical playback progress of content of each film, so that a user can distinguish between content that is viewed and content that is not viewed, and know a playback progress of the content that is viewed; and determining, by collecting statistics about a quantity of visits and viewing duration of the three films, a preset popularity data range to which the content of each film belongs; and determining a popularity level corresponding to each film from a correspondence between a popularity data range and a popularity level, marking, by using a popularity identifier that corresponds to the popularity level, a picture of each film to obtain a display page, and displaying the display page on the terminal, thereby solving a problem in the prior art that a user cannot quickly determine recently relatively hot or popular content when searching a display page with massive media content for media content. In addition, when a preview content acquiring instruction is received, preview content of each piece of media content is determined according to a preview identifier, so that the preview content can be viewed on the user terminal without a need for returning to an original page for selection again, and therefore is convenient and efficient.

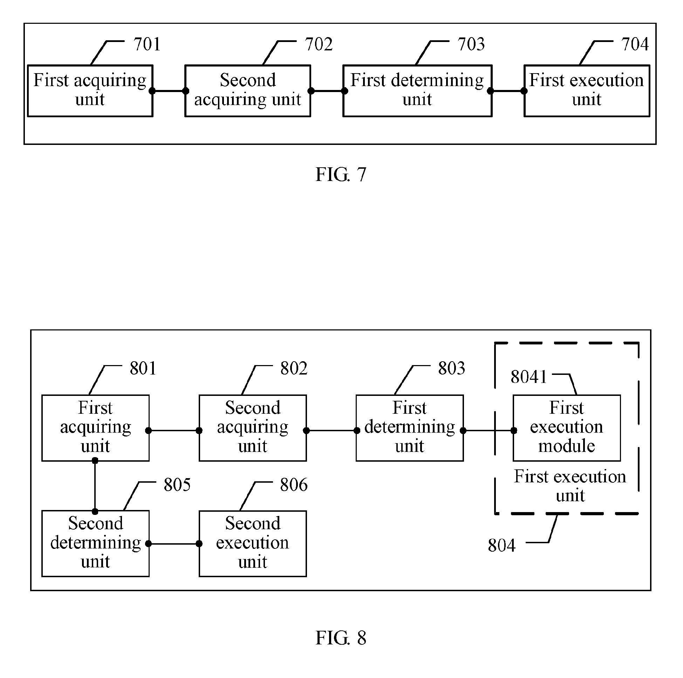

Referring to FIG. 7, an embodiment of an apparatus for displaying a media file in the embodiments of the present invention includes:
a first acquiring unit 701, configured to: when a page acquiring instruction is received, acquire pictures of multiple pieces of media content that need to be included in a to-be-displayed page;
a second acquiring unit 702, configured to acquire popularity data of each piece of media content in the multiple pieces of media content acquired by the first acquiring unit;
a first determining unit 703, configured to determine, according to a preset correspondence between popularity data and a popularity level, a popularity level corresponding to each piece of media content acquired by the second acquiring unit 702; and
a first execution unit 704, configured to mark, by using a popularity identifier that corresponds to the popularity level of each piece of media content, a picture of each piece of media content to obtain the display page, and display the display page on the terminal, where the display page includes the pictures of the multiple pieces of media content.

An apparatus for displaying a media file provided in this embodiment of the present invention: a first acquiring unit 701 determines pictures of multiple pieces of media content when a page acquiring instruction is received; a second acquiring unit 702 acquires popularity data of each piece of media content; and a first determining unit 703 determines, according to the popularity data and according to a preset correspondence between popularity data and a popularity level, a popularity level corresponding to the popularity data of each piece of media content, and a first execution unit 704 marks, by using a popularity identifier that corresponds to the popularity level, a picture of each piece of media content to obtain a display page, and displaying the display page on the terminal, thereby solving a problem in the prior art that a user cannot quickly determine recently relatively hot or popular content when searching a display page with massive media content for media content.

Referring to FIG. 8, an embodiment of an apparatus for displaying media content in the embodiments of the present invention includes:
a first acquiring unit 801, configured to: when a page acquiring instruction is received, acquire pictures of multiple pieces of media content that need to be included in a to-be-displayed page;
a second acquiring unit 802, configured to acquire popularity data of each piece of media content in the multiple pieces of media content acquired by the first acquiring unit 801;
a first determining unit 803, configured to determine, according to a preset correspondence between popularity data and a popularity level, a popularity level corresponding to each piece of media content acquired by the second acquiring unit 802; and
a first execution unit 804, configured to mark, by using a popularity identifier that corresponds to the popularity level, which is determined by the first determining unit 803, of each piece of media content, a picture of each piece of media content to obtain the display page, and display the display page on the terminal, where the display page includes the pictures of the multiple pieces of media content.

In this embodiment of the present invention, the first execution unit 804 includes:
a first execution module 8041, configured to set, according to the popularity level of each piece of media content, different colors of frames for all the pieces of media content to obtain the display page, where different colors correspond to different popularity levels.

Further, the apparatus further includes:
a second determining unit 805, configured to determine a historical playback progress, which is on the terminal, of each piece of media content in the multiple pieces of media content; and
a second execution unit 806, configured to set, on the picture of each piece of media content, a mark for the historical playback progress of each piece of media content.

An apparatus for displaying a media file provided in this embodiment of the present invention includes: a first acquiring unit 801 acquires pictures of multiple pieces of media content when a page acquiring instruction is received; a second acquiring unit 802 acquires popularity data of each piece of media content; and a first determining unit 803 determines, according to the popularity data and according to a preset correspondence between popularity data and a popularity level, a popularity level corresponding to the popularity data of each piece of media content, and a first execution module 8041 marks, by using a popularity identifier that corresponds to the popularity level, a picture of each piece of media content to obtain a display page, and displaying the display page on the terminal, thereby solving a problem in the prior art that a user cannot quickly determine recently relatively hot or popular content when searching a display page with massive media content for media content. In addition, a second execution unit 806 sets, on the picture of each piece of media content, a mark for a historical playback progress of each piece of media content, so that a user can distinguish between content that is viewed and content that is not viewed, and know the historical playback progress.

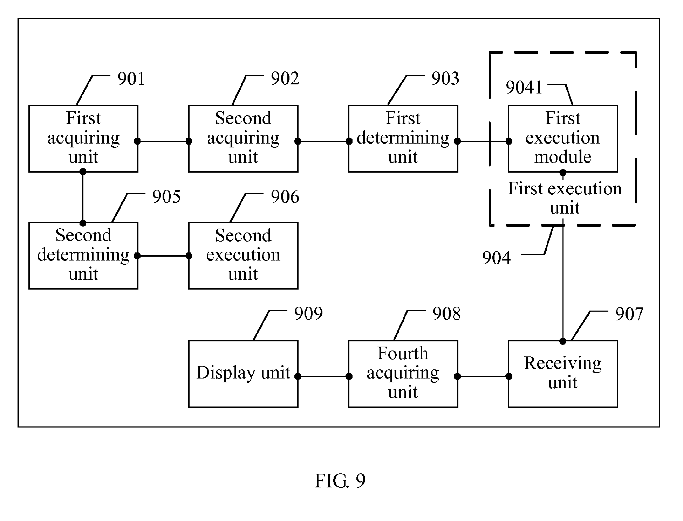

Referring to FIG. 9, another embodiment of an apparatus for displaying media content in the embodiments of the present invention includes:
a first acquiring unit 901, configured to: when a page acquiring instruction is received, acquire pictures of multiple pieces of media content that need to be included in a to-be-displayed page;
a second acquiring unit 902, configured to acquire popularity data of each piece of media content in the multiple pieces of media content acquired by the first acquiring unit 901;
a first determining unit 903, configured to determine, according to a preset correspondence between popularity data and a popularity level, a popularity level corresponding to each piece of media content acquired by the second acquiring unit 902; and
a first execution unit 904, configured to mark, by using a popularity identifier that corresponds to the popularity level, which is determined by the first determining unit 903, of each piece of media content, a picture of each piece of media content to obtain the display page, and display the display page on the terminal, where the display page includes the pictures of the multiple pieces of media content.

In this embodiment of the present invention, the first execution unit 904 includes:
a first execution module 9041, configured to set, according to the popularity level of each piece of media content, different colors of frames for all the pieces of media content to obtain the display page, where different colors correspond to different popularity levels.

Further, the apparatus further includes:
a second determining unit 905, configured to determine a historical playback progress, which is on the terminal, of each piece of media content in the multiple pieces of media content; and
a second execution unit 906, configured to set, on the picture of each piece of media content, a mark for the historical playback progress of each piece of media content.

Further, the apparatus further includes:
a receiving unit 907, configured to receive a preview content acquiring instruction, where the preview content acquiring instruction carries a preview identifier;
a fourth acquiring unit 908, configured to acquire preview content of user-specified media content according to the preview identifier; and
a display unit 909, configured to display the preview content at a display area that does not overlap a display area corresponding to a picture of the user-specified media content.

An apparatus for displaying a media file provided in this embodiment of the present invention includes: a first acquiring unit 901 acquires pictures of multiple pieces of media content when a page acquiring instruction is received; a second acquiring unit 902 acquires popularity data of each piece of media content; and a first determining unit 903 determines, according to the popularity data and according to a preset correspondence between popularity data and a popularity level, a popularity level corresponding to the popularity data of each piece of media content, and a first execution module 9041 marks, by using a popularity identifier that corresponds to the popularity level, a picture of each piece of media content to obtain a display page, and displaying the display page on the terminal, thereby solving a problem in the prior art that a user cannot quickly determine recently relatively hot or popular content when searching a display page with massive media content for media content. In addition, a fourth acquiring unit 908 acquires preview content of user-specified media content according to a preview identifier, and the preview content is displayed at a display area that does not overlap a display area corresponding to a picture of the user-specified media content, so that a user can quickly browse media content without a need for switching or returning to an original page.

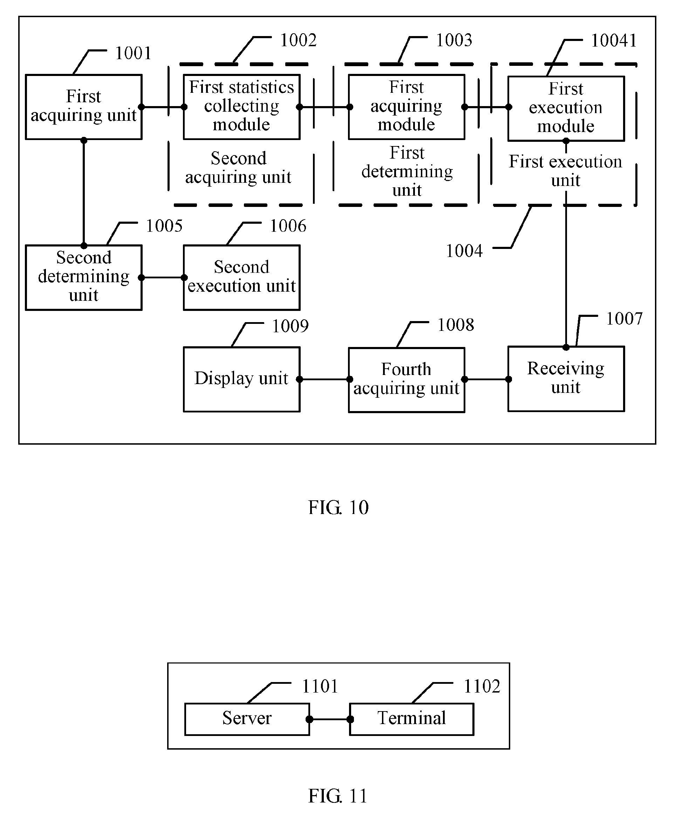

Referring to FIG. 10, another embodiment of an apparatus for displaying media content in the embodiments of the present invention includes:
a first acquiring unit 1001, configured to: when a page acquiring instruction is received, acquire pictures of multiple pieces of media content that need to be included in a to-be-displayed page;
a second acquiring unit 1002, configured to acquire popularity data of each piece of media content in the multiple pieces of media content acquired by the first acquiring unit 1001;
a first determining unit 1003, configured to determine, according to a preset correspondence between popularity data and a popularity level, a popularity level corresponding to each piece of media content; and
a first execution unit 1004, configured to mark, by using a popularity identifier that corresponds to the popularity level, which is determined by the first determining unit 1003, of each piece of media content, a picture of each piece of media content to obtain the display page, and display the display page on the terminal, where the display page includes the pictures of the multiple pieces of media content.

In this embodiment of the present invention, the first execution unit 1004 includes:
a first execution module 10041, configured to set, according to the popularity level of each piece of media content, different colors of frames for all the pieces of media content to obtain the to-be-displayed page.

In this embodiment of the present invention, the second acquiring unit 1002 includes:
a first statistics collecting module 10021, configured to collect statistics about at least either a quantity of visits or viewing duration of each piece of media content in the multiple pieces of media content.

The first determining unit 1003 includes:
a first acquiring module, configured to determine, according to the at least either the quantity of visits or the viewing duration, about which the first statistics collecting module 10021 collects statistics, of each piece of media content, the popularity level of each piece of media content from the preset correspondence between popularity data and a popularity level.

Further, the apparatus further includes:
a second determining unit 1005, configured to determine a historical playback progress, which is on the terminal, of each piece of media content in the multiple pieces of media content; and
a second execution unit 1006, configured to set, on the picture of each piece of media content, a mark for the historical playback progress of each piece of media content.

Further, the apparatus further includes:
a receiving unit 1007, configured to receive a preview content acquiring instruction, where the preview content acquiring instruction carries a preview identifier;
a fourth acquiring unit 1008, configured to acquire preview content of each piece of media content according to the preview identifier; and
a display unit 1009, configured to display the preview content at a display area that does not overlap a display area corresponding to a picture of user-specified media content.

An apparatus for displaying a media file provided in this embodiment of the present invention includes: a first acquiring unit 1001 acquires pictures of multiple pieces of media content; a second acquiring unit 1002 acquires popularity data of each piece of media content; and a first determining unit 1003 determines, according to the popularity data and according to a preset correspondence between popularity data and a popularity level, a popularity level corresponding to each piece of media content, and a first execution module 10041 marks, by using a popularity identifier that corresponds to the popularity level, a picture of each piece of media content to obtain a display page, and displaying the display page on the terminal, thereby solving a problem in the prior art that a user cannot quickly determine recently relatively hot or popular content when searching a display page with massive media content for media content. In addition, a fourth acquiring unit 1008 acquires preview content of user-specified media content according to a preview identifier, and a display unit 1009 displays the preview content at a display area that does not overlap a display area corresponding to a picture of the user-specified media content, so that a user can quickly browse media content without a need for switching or returning to an original page; and a second execution unit 1006 sets, on the picture of each piece of media content, a mark for a historical playback progress of each piece of media content, so that the user can distinguish between content that is viewed and content that is not viewed, and know the historical playback progress.

Referring to FIG. 11, a digital media system of an embodiment of the present invention includes:
a server 1101 and a terminal 1102.

The server 1101 is the apparatus for displaying a media file described in FIG. 7 to FIG. 10.

The terminal 1102 is used for a display page, where the display page includes pictures of multiple pieces of media content.

In this embodiment of the present invention, after receiving a page acquiring instruction sent by a user terminal 1102, a server 1101 acquires popularity data of each piece of media content in a page, determines, according to a preset correspondence between popularity data and a popularity level, a popularity level of each piece of media content, and marks each piece of media content by using a popularity identifier that corresponds to the popularity level, so that when a user receives page content, the user can quickly identify hot or popular media content, thereby effectively reducing searching and browsing time.

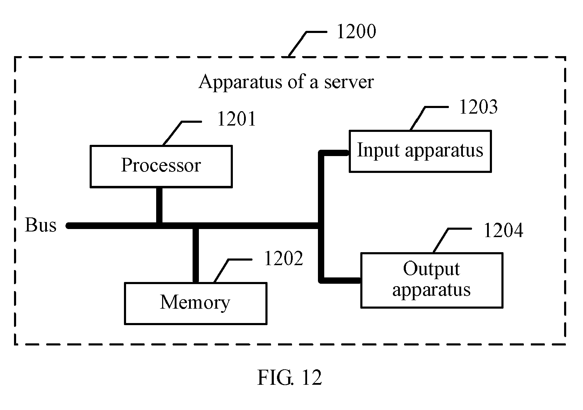

Referring to FIG. 12, FIG. 12 is another schematic structural diagram of an apparatus for displaying a media file provided in an embodiment of the present invention, where the apparatus may include at least one processor 1201 (such as a CPU, Central Processing Unit), at least one network interface or another communication interface, a memory 1202, at least one communication bus, at least one input apparatus 1203, at least one output apparatus 1204 that is configured to implement connection and communication between these apparatuses. The processor 1201 is configured to execute an executable module stored in the memory 1202, for example, a computer program. The memory 1202 may include a high-speed random access memory (RAM), or may also include a non-volatile memory), for example, at least one magnetic disk memory. At least one network interface (which may be wired or wireless) is used to implement communication and connection between a system gateway and at least one another network element, and the Internet, a wide area network, a local area network, a metropolitan area network, or the like may be used.

As shown in FIG. 12, in some implementation manners, the memory 1202 stores a program instruction. The program instruction may be executed by the processor 1201, and the processor 1201 specifically performs the following steps:
when a page acquiring instruction is received, acquiring pictures of multiple pieces of media content that need to be included in a to-be-displayed page;
acquiring popularity data of each piece of media content in the multiple pieces of media content; and
determining, according to a preset correspondence between popularity data and a popularity level, a popularity level corresponding to the popularity data of each piece of media content, marking, by using a popularity identifier that corresponds to the popularity level of each piece of media content, a picture of each piece of media content to obtain the display page, and displaying the display page on the terminal, where the display page includes the pictures of the multiple pieces of media content.

In some implementation manners, the processor 1201 may also perform the following step:
setting, according to the popularity level of each piece of media content, different colors of frames for all the pieces of media content, where the popularity identifier is used to indicate a frame of the picture of each piece of media content, and different colors correspond to different popularity levels.

In some implementation manners, the processor 1201 may also perform the following steps:
determining a historical playback progress, which is on the terminal, of each piece of media content in the multiple pieces of media content; and
setting, on the picture of each piece of media content, a mark for the historical playback progress of each piece of media content.

In some implementation manners, the processor 1201 may also perform the following steps:
receiving a preview content acquiring instruction, where the preview content acquiring instruction carries a preview identifier, and acquiring preview content of user-specified media content according to the preview identifier; and
displaying the preview content at a display area that does not overlap a display area corresponding to a picture of the user-specified media content.

In some implementation manners, the processor 1201 may also perform the following steps:
collecting statistics about at least either a quantity of visits or viewing duration of each piece of media content in the multiple pieces of media content; and
determining, according to the at least either the quantity of visits or the viewing duration of each piece of media content, the popularity level of each piece of media content from the preset correspondence between popularity data and a popularity level.

In the foregoing embodiments, the description of each embodiment has respective focuses. For a part that is not described in detail in an embodiment, reference may be made to related descriptions in other embodiments.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

## Claims

1. A method for displaying a media file on a terminal by using a page, wherein the method comprises:
when a page acquiring instruction is received, acquiring pictures of multiple pieces of media content to be comprised in a to-be-displayed page;
acquiring popularity data of each piece of media content in the multiple pieces of media content; and
determining, according to a preset correspondence between popularity data and a popularity level, a popularity level corresponding to the popularity data of each piece of media content, marking, by using a popularity identifier that corresponds to the popularity level of each piece of media content, a picture of each piece of media content to obtain the display page, and displaying the display page on the terminal, wherein the display page comprises the pictures of the multiple pieces of media content.

2. The method according to claim 1, wherein the popularity identifier is used to indicate a frame of the picture of each piece of media content; and
the marking, by using a popularity identifier that corresponds to the popularity level of each piece of media content, a picture of each piece of media content comprises:
setting, according to the popularity level of each piece of media content, different colors of frames for all the pieces of media content, wherein different colors correspond to different popularity levels.

3. The method according to claim 2, wherein the method further comprises:
determining a historical playback progress, which is on the terminal, of each piece of media content in the multiple pieces of media content; and
during the marking, by using a popularity identifier that corresponds to the popularity level of each piece of media content, a picture of each piece of media content, setting, on the picture of each piece of media content, a mark for the historical playback progress of each piece of media content.

4. The method according to any one of claims 1 to 3, wherein the method further comprises:
receiving a preview content acquiring instruction, wherein the preview content acquiring instruction carries a preview identifier of user-specified media content, and acquiring preview content of the user-specified media content according to the preview identifier; and
displaying the preview content at a display area that does not overlap a display area corresponding to a picture of the user-specified media content.

5. The method according to any one of claims 1 to 3, wherein the acquiring popularity data of each piece of media content in the multiple pieces of media content comprises:
collecting statistics about at least either a quantity of visits or viewing duration of each piece of media content in the multiple pieces of media content; and
the determining, according to a preset correspondence between popularity data and a popularity level, a popularity level corresponding to the popularity data of each piece of media content comprises:
determining, according to the at least either the quantity of visits or the viewing duration of each piece of media content, the popularity level of each piece of media content from the preset correspondence between popularity data and a popularity level.

6. An apparatus for displaying a media file, comprising:
a first acquiring unit, configured to: when a page acquiring instruction is received, acquire pictures of multiple pieces of media content that need to be comprised in a to-be-displayed page;
a second acquiring unit, configured to acquire popularity data of each piece of media content in the multiple pieces of media content acquired by the first acquiring unit;
a first determining unit, configured to determine, according to a preset correspondence between popularity data and a popularity level, a popularity level corresponding to the popularity data of each piece of media content; and
a first execution unit, configured to mark, by using a popularity identifier that corresponds to the popularity level of each piece of media content, a picture of each piece of media content to obtain the display page, and display the display page on the terminal, wherein the display page comprises the pictures of the multiple pieces of media content.

7. The apparatus according to claim 6, wherein the first execution unit comprises:
a first execution module, configured to set, according to the popularity level of each piece of media content, different colors of frames for all the pieces of media content to obtain the display page, wherein different colors correspond to different popularity levels.

8. The apparatus according to claim 7, wherein the apparatus further comprises:
a second determining unit, configured to determine a historical playback progress, which is on the terminal, of each piece of media content in the multiple pieces of media content; and
a second execution unit, configured to: during the marking, by using a popularity identifier that corresponds to the popularity level of each piece of media content, a picture of each piece of media content, set, on the picture of each piece of media content, a mark for the historical playback progress of each piece of media content.

9. The apparatus according to any one of claims 6 to 8, wherein the apparatus further comprises:
a receiving unit, configured to receive a preview content acquiring instruction, wherein the preview content acquiring instruction carries a preview identifier of user-specified media content;
a fourth acquiring unit, configured to determine preview content of each piece of media content according to the preview identifier; and
a display unit, configured to display the preview content at a display area that does not overlap a display area corresponding to a picture of the user-specified media content.

10. The apparatus according to any one of claims 6 to 8, wherein the second acquiring unit comprises:
a first statistics collecting module, configured to collect statistics about at least either a quantity of visits or viewing duration of each piece of media content in the multiple pieces of media content; and
further, the first determining unit comprises:
a first acquiring module, configured to determine, according to the at least either the quantity of visits or the viewing duration, about which the first statistics collecting module collects statistics, of each piece of media content, the popularity level of each piece of media content from the preset correspondence between popularity data and a popularity level.

11. A digital media system, comprising:
a server and a terminal, wherein
the server is the apparatus for displaying a media file according to any one of the foregoing claims 6 to 10; and
the terminal is configured for a display page, wherein the display page comprises the pictures of the multiple pieces of media content.
